# EUROPÄISCHE PATENTANMELDUNG

(11) **EP 3 199 930 A1**
(43) Veröffentlichungstag der Anmeldung: **02.08.2017**
(21) Anmeldenummer: 17151130.6
(22) Anmeldetag: 12.01.2017
(51) Int. Cl.: G01K 7/22, G01K 13/02, G01F 23/24

(54) **SENSOREINHEIT UND WASCHMASCHINE**

(30) Priorität: 26.01.2016 DE 102016101324
(71) Anmelder: Miele & Cie. KG, 33332 Gütersloh (DE)
(72) Erfinder: Dahlke, Dirk, 33378 Rheda-Wiedenbrück (DE); Rocholl, Henrik, 32130 Enger (DE)

(57) **Zusammenfassung**

Die Erfindung betrifft eine Sensoreinheit, die einen Temperatursensor (1) und zwei von einem Medium entlang einer Strömungsrichtung (S) durchströmbare Körper (2) aufweist, wobei sich die Körper (2) zumindest im Bereich des Temperatursensors (1) entlang der Strömungsrichtung (S) erstrecken, dadurch gekennzeichnet, dass der Temperatursensor (1) mit den zwei Körpern (2) und/oder den Medien thermisch gekoppelt ist. Ferner betrifft die Erfindung eine Waschmaschine, die die Sensoreinheit und zwei Behälter oder Kartuschen aufweist, die mit der Sensoreinheit verbunden sind und jeweils ein Flüssigmedium in Form eines Flüssigwaschmittels enthalten.

## Beschreibung

Die Erfindung betrifft eine Sensoreinheit und eine Waschmaschine.

Eine Waschmaschine mit einer Dosiereinheit ermöglicht eine Dosierung von Medien wie Flüssigwaschmitteln aus zwei Behältern oder Kartuschen. Zur Erkennung eines Leerstandes der Behälter oder Kartuschen ist jedem Behälter oder Kartusche jeweils eine Sensoreinheit zugeordnet. Die Sensoreinheiten weisen im druckschriftlich nicht belegten Stand der Technik jeweils ein von einem Medium aus dem Behälter oder der Kartusche entlang einer Strömungsrichtung durchströmbares Edelstahlrohr auf, an dem außen ein PTC-Sensor (Kaltleiter) befestigt ist. Der Sensor wird temperaturgeregelt beheizt.

Durchströmt das Medium aus dem Behälter oder der Kartusche das Edelstahlrohr, kühlt dieses stärker ab als bei keiner Durchströmung mit dem Medium, wenn der Behälter oder die Kartusche leer ist, sodass die Regelung mehr Energie benötigt, um der Störgröße entgegen zu wirken. Anhand des Energieverlaufs kann daher zwischen vorhandenem und nichtvorhandenem Mediendurchfluss unterschieden werden. Die Sensoreinheiten sind jedoch teuer.

Der Erfindung stellt sich somit das Problem, eine Sensoreinheit und eine Waschmaschine mit einer Dosiereinheit bereitzustellen, die kostengünstig sind.

Erfindungsgemäß wird dieses Problem durch eine Sensoreinheit mit den Merkmalen des Patentanspruchs 1 und eine Waschmaschine mit den Merkmalen des Patentanspruchs 10 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben der Kostengünstigkeit darin, dass Bauteile wie ein zweiter Sensor überflüssig werden. Ein Durchfluss bzw. ein Leerstand von zwei Behältern oder Kartuschen können durch zwei Körper mit nur einer Sensoreinheit erfasst werden. Eine Zuordnung des Leerstands zu einem der Behälter oder Kartuschen ist insbesondere möglich, wenn ein Medienausfluss aus den Behältern oder Kartuschen in einem Gerät wie einer Waschmaschine zu unterschiedlichen Zeitpunkten aktiviert wird.

Die Erfindung betrifft eine Sensoreinheit, die einen Temperatursensor und zwei von einem Medium entlang einer Strömungsrichtung durchströmbare Körper aufweist, wobei sich die Körper zumindest im Bereich des Temperatursensors entlang der Strömungsrichtung erstrecken und der Temperatursensor mit den zwei Körpern und/oder den Medien thermisch gekoppelt ist. Die Sensoreinheit eignet sich vorzugsweise zur Verbindung mit einer Dosiereinheit, die zwei Behälter oder Kartuschen aufweist, die jeweils mit einem der zwei Körper verbunden sind und nicht gleichzeitig zur Dosierung aktiviert werden. Wenn die Sensoreinheit einen Leerstand sensiert, kann dieser dem Behälter oder Kartusche zugeordnet werden, dessen Medienausfluss aktiviert ist.

Die Körper können beispielsweise Rohre, Hülsen, Schläuche oder dergleichen sein, die von einem Fluid als Medium durchströmbar sind. Der Temperatursensor ist vorzugsweise ein Widerstandsthermometer wie beispielsweise ein PTC-Sensor beispielsweise aus Platin. Das aus dem Behälter oder der Kartusche ausströmende Medium ist vorzugsweise eine Flüssigkeit wie ein Flüssigwaschmittel.

In einer bevorzugten Ausführungsform steht der Temperatursensor in Kontakt mit den Außenseiten der zwei Körper und/oder dem Inneren der zwei Körper. Der Temperatursensor sensiert, ob bei den beiden Körpern an der Außenseite und/oder in ihrem Inneren eine Temperaturänderung auftritt. Dadurch kann sensiert werden, ob eine Flüssigkeit wie beispielsweise Flüssigwaschmittel oder ein Gas wie beispielsweise Luft in einem der oder den Körpern vorhanden ist.

In einer bevorzugten Ausführungsform ist jeder der zwei Körper ein Metallrohr, ist der Temperatursensor ein PTC-Sensor und sind die zwei Körper über eine Lötverbindung mit dem Temperatursensor miteinander verbunden. Die Metallrohre sind beispielsweise Edelstahlrohre. Die Metallrohre können verschiedene Geometrien aufweisen. Die Metallrohre sind vorzugsweise gebogen und/oder abgekantet. Dadurch können sie leicht mit Leitungen zum Anschließen an Bauteile eines Geräts wie einer Waschmaschine versehen werden.

Die Metallrohre können auch gerade ausgestaltet sein. Vorzugsweise sind beide Metallrohre gebogen und an der Biegung zusammen und mit dem Temperatursensor verlötet. In einer anderen bevorzugten Ausgestaltung ist ein Metallrohr gebogen und ein Metallrohr gerade. In einer noch anderen bevorzugten Ausgestaltung weist jedes Metallrohr einen geraden Rohrabschnitt auf, an dem die Metallrohre zusammen und mit dem Temperatursensor über eine Lötverbindung verbunden sind und einen weiteren geraden Rohrabschnitt auf, der zu dem geraden Rohrabschnitt winkelig ausgebildet ist, an dem die Metallrohre zusammen und mit dem Temperatursensor über eine Lötverbindung verbunden sind. Vorzugsweise ist ein Vergussmaterial an der Verbindungsstelle der beiden Metallrohre und des Temperatursensors angeordnet. Vorzugsweise ist der Temperatursensor mit einem Heizelement über eine elektrische Leitung verbunden, dann kann mittels des Vergussmaterials Elektronik gesichert werden.

Vorzugsweise sind die Metallrohre an ihren Enden jeweils mit einer Leitung beispielsweise einem Schlauch verbunden. Die Leitungen können als flexible Verbindungselemente dienen, sodass die Sensoreinheit in ein Gerät leicht integrierbar ist.

In einer weiteren bevorzugten Ausführungsform ist jeder der zwei Körper ein Schlauch, der einen Schlitz aufweist, in dem ein mit dem Temperatursensor verbundenes Metallteil derart angeordnet ist, dass es sich in das Innere der zwei Schläuche erstreckt. Über das Metallteil kann der Temperatursensor sensieren, ob ein flüssiges oder gasförmiges Medium in den Schläuchen ist.

Vorzugsweise ist eine Vergussmasse an dem Temperatursensor und den Schlitzen angeordnet. Dadurch wird die Sensoreinheit an dieser Stelle vor Undichtheit, Feuchte und Verunreinigungen geschützt. Weiterhin kann dadurch Elektronik gesichert werden, denn vorzugsweise ist der Temperatursensor mit einem Heizelement über eine elektrische Leitung verbunden.

In einer bevorzugten Ausführungsform ist das Metallteil derart ausgebildet und angeordnet, dass es in einen durch eine Schlauchinnenseite gebildeten Hohlraum jedes Schlauchs hineinragt. Dadurch kann das Metallteil von den durch die Körper strömenden Medien umströmt werden. Der Temperatursensor steht in Kontakt mit dem Inneren der zwei Körper und kann so sensieren, ob die Körper von einem Flüssigmedium durchströmt werden oder nicht.

Das Metallteil ist vorzugsweise derart ausgebildet und angeordnet, dass es sich zumindest teilweise entlang einer Schlauchinnenseite jedes Schlauchs erstreckt. Dadurch stellt das Metallteil kein Hindernis für durch die Körper strömende Medien dar.

Die Erfindung betrifft weiterhin eine Waschmaschine, aufweisend die vorstehende Sensoreinheit in einer oder mehreren der beschriebenen Ausführungsformen und zwei Behälter oder Kartuschen, die mit der Sensoreinheit verbunden sind und jeweils ein Flüssigmedium in Form eines Flüssigwaschmittels enthalten. Die Förderwege der zwei Behälter oder Kartuschen der Waschmaschine und der Temperatursensor sind thermisch verbunden. Vorzugsweise ist die Sensoreinheit zumindest im Bereich des Temperatursensors vergossen d.h. von einem Vergussmaterial umgeben. Die Behälter oder Kartuschen enthalten vorzugsweise verschiedene Flüssigwaschmittel.

Die Behälter oder Kartuschen sind vorzugsweise Teil einer Dosiereinheit der Waschmaschine, die vorzugsweise ausgelegt ist, während einer Durchführung eines Waschprogramms Flüssigmedien aus den Behältern oder Kartuschen zu verschiedenen Zeitpunkten des Waschprogramms über Leitungen in einen Laugenbehälter der Waschmaschine zu dosieren. Die Sensoreinheit bzw. der Temperatursensor ist vorzugsweise zwischen den Behältern oder Kartuschen und dem Laugenbehälter in die Leitungen integriert. Dadurch, dass Flüssigwaschmittel aus den Behältern oder Kartuschen zu verschiedenen Zeitpunkten eines Waschprogramms in den Laugenbehälter dosiert wird, ist über den Energieverlauf des Temperatursensors und der Behälter- oder Kartuschenaktivierung ermittelbar, welcher der beiden Behälter oder Kartuschen leer ist, wenn ein Leerstand von der Sensoreinheit sensiert wird.

Ein Ausführungsbeispiel der Erfindung ist in den Zeichnungen rein schematisch dargestellt und wird nachfolgend näher beschrieben. Es zeigt
- Fig. 1: eine Querschnittsansicht einer Sensoreinheit in einer ersten Ausführungsform;
- Fig. 2: eine Querschnittsansicht einer Sensoreinheit in einer zweiten Ausführungsform;
- Fig. 3: eine Querschnittsansicht einer Sensoreinheit in einer dritten Ausführungsform;
- Fig. 4: eine Draufsicht auf eine Sensoreinheit in einer vierten Ausführungsform;
- Fig. 5: eine Querschnittsansicht der in Fig. 4 gezeigten Sensoreinheit; und
- Fig. 6: eine Querschnittsansicht einer Sensoreinheit in einer fünften Ausführungsform.

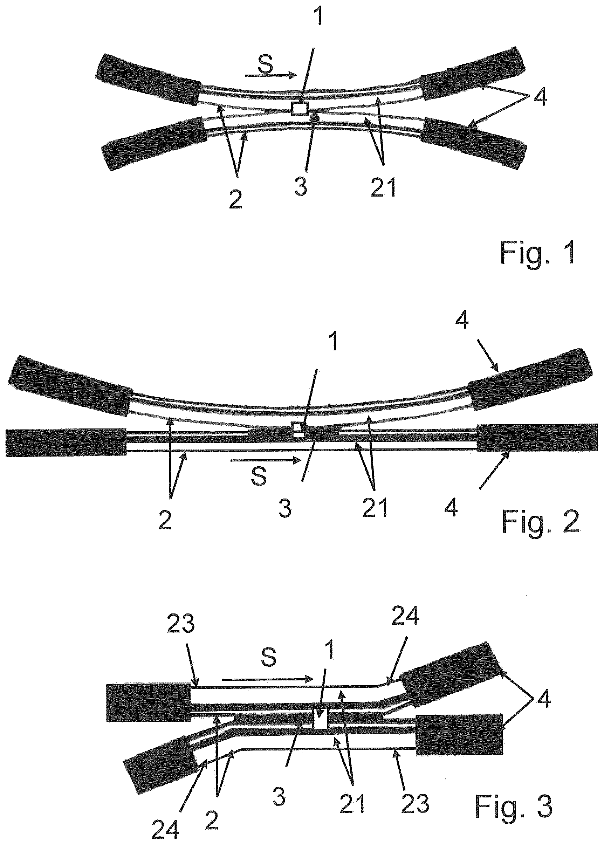

Fig. 1 zeigt eine Querschnittsansicht einer Sensoreinheit in einer ersten Ausführungsform. Die Sensoreinheit in der ersten Ausführungsform weist einen Temperatursensor 1 in Form eines PTC-Sensors und zwei von einem Medium (nicht gezeigt) entlang einer Strömungsrichtung S durchströmbare Körper 2 mit jeweils einem Hohlraum 21 auf. Die zwei Körper 2 erstrecken sich zumindest im Bereich des Temperatursensors 1 entlang der Strömungsrichtung S, in der Medien durch sie strömen können. Die zwei Körper 2 sind zwei gebogene Metallrohre, beispielsweise kreisbogenförmige Edelstahlrohre. An ihren Enden sind die zwei Körper 2 jeweils mit Leitungen 4, beispielsweise Schläuchen, verbunden, die auf die Körper 2 aufgesteckt sind. Der Temperatursensor 1 ist mit den zwei Körpern 2 thermisch gekoppelt. Der Temperatursensor 1 ist mit den zwei Körpern 2 über eine Lötverbindung 3 im Bereich ihrer Biegung verbunden, sodass er in Kontakt mit den Außenseiten der zwei Körper 2 steht.

Bei Betrieb wird der Temperatursensor 1 temperaturgeregelt mittels eines Heizelements (nicht gezeigt) beheizt, das mit ihm über eine Anschlussleitung (nicht gezeigt) verbunden ist. Durchströmt eine Flüssigkeit einen der Körper 2, dann kühlt er stärker ab als wenn er Luft aufweist. Wenn die Sensoreinheit in einer Waschmaschine (nicht gezeigt) angeordnet ist, die zwei Behälter oder Kartuschen (nicht gezeigt) aufweist, die mit der Sensoreinheit verbunden sind und jeweils ein Flüssigmedium in Form eines Flüssigwaschmittels enthalten, ist jeweils ein Ende der Körper 2 über jeweils eine Leitung 4 mit jeweils einem Behälter oder Kartusche verbunden, während das andere Ende der Körper 2 über eine Leitung 4 beispielsweise mit einem Laugenbehälter (nicht gezeigt) der Waschmaschine verbunden ist.

Die Behälter oder Kartuschen sind Teil einer Dosiereinheit (nicht gezeigt) der Waschmaschine, die aus den beiden Behälter oder Kartuschen Flüssigwaschmittel zu verschiedenen Zeitpunkten eines Waschprogramms in den Laugenbehälter dosiert. Wenn die Dosiereinheit aktiviert ist, aus einem der Behälter oder Kartuschen Flüssigwaschmittel in den Laugenbehälter zu dosieren, und das Flüssigwaschmittel den dem Behälter oder Kartusche zugeordneten Körper 2 durchströmt, kühlt der Körper 2 stärker ab, als wenn er Luft aufweist. Wenn sich bei aktivierter Dosiereinheit der Energieverlauf des Temperatursensors 1 nicht ändert, ist der Behälter oder die Kartusche, aus dem oder der Flüssigwaschmittel in den Laugenbehälter zudosiert werden soll leer. Anhand des Zeitpunkts des Waschprogramms ergibt sich, welcher der beiden Behälter oder Kartuschen leer ist.

Fig. 2 zeigt eine Querschnittsansicht einer Sensoreinheit in einer zweiten Ausführungsform.
Die in Fig. 2 gezeigte Sensoreinheit entspricht der in Fig. 1 gezeigten Sensoreinheit mit dem Unterschied, dass einer der Körper 2 kein gebogenes Metallrohr sondern ein gerades Metallrohr ist.

Fig. 3 zeigt eine Querschnittsansicht einer Sensoreinheit in einer dritten Ausführungsform.
Die in Fig. 3 gezeigte Sensoreinheit entspricht der in Fig. 1 gezeigten Sensoreinheit mit dem Unterschied, dass die Körper 2 keine gebogenen Metallrohre sondern zwei Metallrohre sind, die jeweils einen gerade Rohrabschnitt 23, an dem die Körper 2 über die Lötverbindung 3 mit dem Temperatursensor 1 und miteinander verbunden sind, und einen weiteren geraden Rohrabschnitt 24 aufweisen, der winkelig zu dem geraden Rohrabschnitt 23 ausgebildet ist, an dem die Körper 2 über die Lötverbindung 3 mit dem Temperatursensor 1 und miteinander verbunden sind.

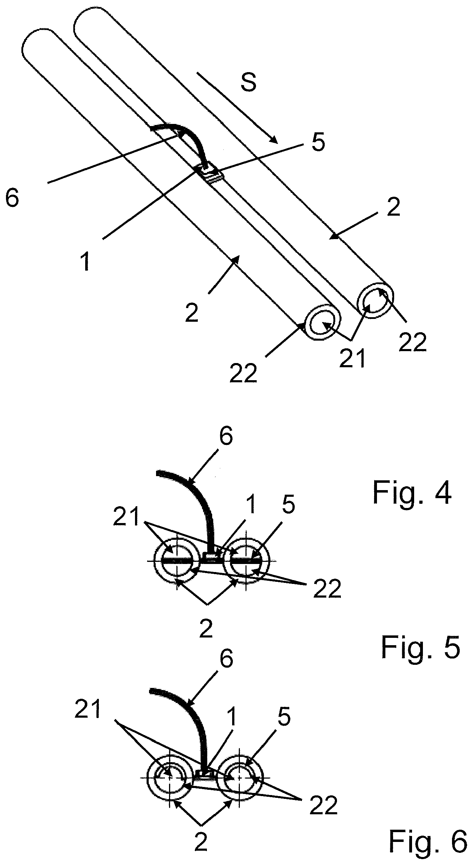

Fig. 4 zeigt eine Draufsicht auf eine Sensoreinheit in einer vierten Ausführungsform. Die Sensoreinheit weist in der vierten Ausführungsform einen Temperatursensor 1 in Form eines PTC-Sensors und zwei von einem Medium (nicht gezeigt) entlang einer Strömungsrichtung S durchströmbare Körper 2 in Form von Schläuchen auf. Die Körper 2 erstrecken sich zumindest im Bereich des Temperatursensors 1 entlang der Strömungsrichtung S, in der die Medien durch die Körper 2 strömen können. Jeder Körper 2 weist einen Schlitz (nicht gezeigt) auf, in dem ein mit dem Temperatursensor 1 verbundenes Metallteil 5 derart angeordnet ist, dass es sich in das Innere der zwei Körper 2 erstreckt, sodass der Temperatursensor 1 mit den durch die Körper 2 durchströmbaren Medien thermisch gekoppelt ist. Der Temperatursensor 1 steht über das Metallteil 5 in Kontakt mit dem Inneren der zwei Körper 2.
Der Temperatursensor 1 ist über eine Anschlussleitung 6 mit einem Heizelement (nicht gezeigt) verbunden, sodass er temperaturegelbar ist. Die in Fig. 4 gezeigte Sensoreinheit wird auf die gleiche Weise wie die in Fig. 1 gezeigte Sensoreinheit betrieben und in ein Gerät wie die Waschmaschine integriert.

Fig. 5 zeigt eine Querschnittsansicht der in Fig. 4 gezeigten Sensoreinheit. Das Metallteil 5 ist derart ausgebildet und angeordnet, dass es in einen durch eine Schlauchinnenseite 22 gebildeten Hohlraum 21 jedes Körpers 2 hineinragt. Wenn ein Medium (nicht gezeigt) durch einen der Körper 2 strömt, wird der in dem Körper 2 angeordnete Teil des Metallteils 5 von dem Medium umströmt.

Fig. 6 zeigt eine Querschnittsansicht einer Sensoreinheit in einer fünften Ausführungsform.
Die Sensoreinheit entspricht der in Fig. 4 und 5 gezeigten Sensoreinheit in der vierten Ausführungsform mit dem Unterschied, dass das Metallteil 5 derart ausgebildet und angeordnet ist, dass es sich zumindest teilweise entlang einer Schlauchinnenseite 22 jedes Körpers 2 erstreckt und gleichzeitig in Kontakt mit dem Hohlraum 21 des Körper 2 steht.

### Bezugszeichenliste

- 1: Temperatursensor
- 2: Körper
- 21: Hohlraum
- 22: Schlauchinnenseite
- 23: Rohrabschnitt
- 24: weiterer Rohrabschnitt
- 3: Lötverbindung
- 4: Leitung
- 5: Metallteil
- 6: Anschlussleitung

## Patentansprüche

1. Sensoreinheit, die einen Temperatursensor (1) und zwei von einem Medium entlang einer Strömungsrichtung (S) durchströmbare Körper (2) aufweist, wobei sich die Körper (2) zumindest im Bereich des Temperatursensors (1) entlang der Strömungsrichtung (S) erstrecken, **dadurch gekennzeichnet, dass** der Temperatursensor (1) mit den zwei Körpern (2) und/oder den Medien thermisch gekoppelt ist.

2. Sensoreinheit nach Anspruch 1, **dadurch gekennzeichnet, dass** der Temperatursensor (1) in Kontakt mit den Außenseiten der zwei Körper (2) und/oder dem Inneren der zwei Körper (2) steht.

3. Sensoreinheit nach Anspruch 1 oder 2, **dadurch gekennzeichnet, dass** jeder der zwei Körper (2) ein Metallrohr ist, der Temperatursensor (1) ein PTC-Sensor ist und die zwei Körper (2) über eine Lötverbindung (3) mit dem Temperatursensor (1) miteinander verbunden sind.

4. Sensoreinheit nach Anspruch 3, **dadurch gekennzeichnet, dass** die Metallrohre gebogen und/oder abgekantet sind.

5. Sensoreinheit nach Anspruch 3 oder 4, **dadurch gekennzeichnet, dass** die Metallrohre an ihren Enden jeweils mit einer Leitung (4) verbunden sind.

6. Sensoreinheit nach Anspruch 1 oder 2, **dadurch gekennzeichnet, dass** jeder der zwei Körper (2) ein Schlauch ist, der einen Schlitz aufweist, in dem ein mit dem Temperatursensor (1) verbundenes Metallteil (5) derart angeordnet ist, dass es sich in das Innere der zwei Schläuche erstreckt.

7. Sensoreinheit nach Anspruch 6, **dadurch gekennzeichnet, dass** eine Vergussmasse an dem Temperatursensor (1) und den Schlitzen angeordnet ist.

8. Sensoreinheit nach Anspruch 6 oder 7, **dadurch gekennzeichnet, dass** das Metallteil (5) derart ausgebildet und angeordnet ist, dass es in einen durch eine Schlauchinnenseite (22) gebildeten Hohlraum (21) jedes Schlauchs hineinragt.

9. Sensoreinheit nach einem der Ansprüche 6 bis 8, **dadurch gekennzeichnet, dass** das Metallteil (5) derart ausgebildet und angeordnet ist, dass es sich zumindest teilweise entlang einer Schlauchinnenseite (22) jedes Schlauchs erstreckt.

10. Waschmaschine, aufweisend eine Sensoreinheit nach einem der vorangehenden Ansprüche und zwei Behälter oder Kartuschen, die mit der Sensoreinheit verbunden sind und jeweils ein Flüssigmedium in Form eines Flüssigwaschmittels enthalten.
